# EUROPEAN PATENT APPLICATION

(11) **EP 3 663 131 A1**
(43) Date of publication of application: **10.06.2020**
(21) Application number: 19213770.1
(22) Date of filing: 05.12.2019
(51) Int. Cl.: B60P 1/44, G07C 9/28

(54) **A SAFETY ARRANGEMENT**

(30) Priority: 06.12.2018 SE 1851517
(71) Applicant: R Kjellbergs Plast AB, 844 22 Bispgården (SE)
(72) Inventor: Selander, Kenth, 844 41 BISPGÅRDEN (SE)
(74) Representative: AWA Sweden AB

(57) **Abstract**

The invention relates to a safety arrangement for a tail lift (1) of a truck (2), the safety arrangement comprising a tail lift control unit (12) for controlling operation of the tail lift (1); a wireless access device (30) for generating a control signal; and a receiver for receiving the control signal. The tail lift control unit (12) is configured to allow operation of the tail lift (1) by means of the tail lift control unit (12) in response to the receiver receiving a control signal indicating that the access device (30) is located within a predetermined distance from the tail lift control unit (12), and to block operation of the tail lift (1) by means of the tail lift control unit (12) when the control signal indicates that the access device (30) is located at a distance exceeding the predetermined distance from the tail lift control unit (12) or when not receiving a signal from the access device (30). The safety arrangement (10) thus allows hands-free blocking and unblocking of the operation of a tail lift by means of a tail lift control unit of a truck.

## Description

### FIELD OF THE INVENTION

The present invention relates to the field of control devices for tail lifts, and particularly to a safety arrangement for a tail lift arranged on a truck.

### BACKGROUND OF THE INVENTION

Trucks provided with a tail lift are extensively used for transportation of goods due to the fact that the tail lift facilitates the loading and unloading of goods onto and from the truck, providing a safe and efficient way of moving goods between a ground level or a loading/unloading dock and the level of the vehicle bed. Tail lifts are generally operable by means of a control unit having buttons for requesting the operation to be carried out. Such operations usually include lowering, raising and tilting the tail lift platform. The control unit is often arranged at the back of the truck, near the tail lift, in order for the operator of the control unit to have full control over the goods on the tail lift and of the surrounding. This facilitates the prevention of any accident caused, for example, by goods not completely arranged on the tail lift platform, which thereby risk falling off as the tail lift is lowered or raised. Another risk is related to persons and vehicles not paying attention and approaching the truck as the tail lift is in motion, thereby risking being hit by the tail lift. Thus, to reduce these risks, the control unit is generally accessible from the outside of the truck.

To prevent unauthorized persons from operating the control unit when the driver is not near the truck, a general switch is often provided inside the driver cabin of the truck, the activation of which blocks the control unit from controlling the tail lift, generally by disconnecting the control unit from its power source on the truck. It can, however, be bothersome for a driver to enter the driver cabin of the truck to block the control unit before leaving the truck to deliver the goods that have been unloaded therefrom. This is particularly true and inefficient for transport and distribution of e.g. parcel-goods, considering the amount of stops the driver generally makes when delivering parcels, and the inconvenience of entering the driver cabin and activating a switch while carrying the goods to deliver. There is thus a need for a more efficient and safe way of blocking control units for tail lifts arranged at an outer wall of a truck.

### SUMMARY OF THE INVENTION

An object of the present invention is to overcome, or at least lessen the above mentioned problems. A particular object is to provide a safety arrangement which provides an efficient way of blocking a control unit from controlling the operation of a tail lift of a truck.

To better address this concern, in a first aspect of the invention there is presented a safety arrangement for a tail lift of a truck, the safety arrangement comprising a tail lift control unit for controlling operation of the tail lift, a wireless access device for generating a control signal, and a receiver for receiving the control signal. The tail lift control unit is configured to allow operation of the tail lift by means of the tail lift control unit in response to the receiver receiving a control signal indicating that the access device is located within a predetermined distance from the tail lift control unit, and to block operation of the tail lift by means of the tail lift control unit when the control signal indicates that the access device is located at a distance exceeding the predetermined distance from the tail lift control unit, or when not receiving a signal from the access device.

There is thus provided a safety arrangement which without any special action from an operator blocks or allows the operation of the tail lift based on the presence of the access device. Being wireless, the access device is portable and can be carried by an operator or driver of the truck. When the operator carrying the access device is beyond the predetermined distance from the tail lift control unit, the receiver will not receive a control signal indicating that the access device is located within the predetermined distance, and thereby operation of the tail lift by means of the tail lift control unit is blocked. This is particularly advantageous when transporting goods which has to be delivered to a site that is not in the immediate vicinity of the truck. Currently, in order to prevent unauthorized persons from operating the tail lift, the operator generally has to enter the driver cabin to activate a switch connected to the tail lift control unit for blocking any operation of the tail lift therefrom. The present invention allows an operator, carrying the access device for example in a pocket, to instead simply walk away from the truck while the control signal indicates to the receiver whether it is within the predetermined distance from the tail lift control unit or not. When the receiver does not receive a signal from the access device, or a signal indicating that the access device is beyond the predetermined distance from the tail lift control unit, operation of the tail lift by means of the tail lift control unit is blocked. Thereby, the safety arrangement provides a hands-free locking of the tail lift control unit whenever the operator is not within the predetermined distance from the tail lift control unit. Correspondingly, when the operator carrying the access device approaches the truck, the operation of the tail lift by means of the tail lift control unit is allowed without the operator having to perform any special action for unblocking operation of the tail lift.

In accordance with an embodiment of the safety arrangement, the tail lift control unit comprises the receiver. Providing a tail lift control unit comprising the receiver allows for an efficient installation of this part of the safety arrangement on a truck. Also, the receiver can be arranged on a tail lift control unit currently used in the art by installing the receiver therein and correspondingly adapt the circuitry of the tail lift control unit. Thereby, the safety arrangement can be implemented on currently used tail lift systems comprising a tail lift control unit.

In accordance with an embodiment of the safety arrangement, the tail lift control unit is arranged at a truck body. This is a suitable arrangement of the tail lift control unit as it assures operation of the tail lift is performed at a close distance from the tail lift. Generally, the tail lift control unit is arranged at a rear end of the truck, at an outer wall thereof.

In accordance with an embodiment of the safety arrangement, the access device comprises a transmitter arranged to transmit the control signal. The safety arrangement is here configured such that only a signal from the transmitter can be validly received by the receiver for allowing the operation of the tail lift. If the receiver receives a signal from a transmitter which transmits a different signal, operation of the tail lift is blocked. The control signal can for example be a coded signal, which the receiver decodes upon reception of the same. It can also be a non-coded signal.

In accordance with an embodiment of the safety arrangement, the control signal is configured to have a range corresponding to the predetermined distance. This provides an energy efficient signal considering that the range is limited to that of the predetermined distance. The access device comprises a portable power source for the transmitter, such as a battery. Limiting the range of the control signal thus requires less power and allows the access device to operate at lower wattage. When the power source of the access device is a battery, the low wattage results in a long duration of the battery.

In accordance with an embodiment of the safety arrangement, the control signal is a radio signal. The radio signal can operate on one or more radio frequencies. The radio signal can for example be a pulsed signal, or a frequency modulated signal, and transmit a signal at regular intervals. The radio signal is, according to another embodiment, a continuous signal.

In accordance with an embodiment of the safety arrangement, the access device is wearable at least at one of a wrist and a neck, or in a pocket of an operator. This provides a practical safety arrangement, allowing the operator to easily carry the access device without limiting the operator's capability of performing operations with the hands, such as lifting.

In accordance with an embodiment of the safety arrangement, the tail lift control unit further comprises an indicator which is active when the receiver receives the control signal from the access device. The indicator can, for example, be one of a visual and an audible indicator. This is advantageous for example when there is more than one operator, but only one is authorized for control of the operation of the tail lift. When the authorized operator, carrying the access device, is within the predetermined distance from the tail lift control unit, the indicator is active providing an indication to the other operator who then can control the operation of the tail lift under the supervision of the authorized operator. The indicator can also provide a clear indication to the operator that the access device is missing, as it may have fallen off or unintentionally been left at a point beyond the predetermined distance. The indicator can for example be a light source which is lit when the indicator is active. The light can be continuous or discontinuous. The indicator can also be a sound emitted when the indicator is active.

In accordance with an embodiment of the safety arrangement, the indicator is configured to indicate when the battery power of the access device is low. This is advantageous as it provides a preventive measure for an optimal use of the access device. It allows the operator to, in due time, exchange the battery of the access device and avoid unexpectedly running out of power for the access device, which would result in the operation of the tail lift being blocked, at least temporarily. In an example, the indicator changes from providing a continuous light to providing a discontinuous light when the battery power of the access device is reduced. When the battery is at a critically low level, the indicator can provide a light in a different color such to provide a clear indication to the operator that a battery change is needed.

In accordance with an embodiment of the safety arrangement, the safety arrangement further comprises a main access control switch arrangeable in an active state and an inactive state. When the main access control switch is in the active state, operation of the tail lift control unit is allowed irrespective of the location of the access device. The main access control switch is in one example arranged inside the driver cabin. Therefrom, it can be activated by the driver or operator such that the tail lift is operable despite the receiver not receiving a valid control signal. This is particularly advantageous if, for example, the access device is out of power, is lost or when a driver or operator forgets to pass the access device on to a colleague when switching shifts.

According to a second aspect of the present invention, there is provided a method of operating and securing a tail lift of a truck by means of a safety arrangement, the safety arrangement comprising a tail lift control unit for controlling the operation of a tail lift, a wireless access device for generating a control signal, and a receiver for receiving the control signal. The method comprises the steps of: transmitting the control signal from the access device; receiving the control signal from the access device; verifying that the control signal is valid for operation of the tail lift; upon verification of the control signal, allowing operation of the tail lift by means of the tail lift control unit; and upon reception of an invalid signal, or of no signal, blocking operation of the tail lift by means of the tail lift control unit. This provides a hands-free method of blocking and unblocking the operation of a tail lift by means of a tail lift control unit of a truck.

In accordance with an embodiment of the method of operating and securing a tail lift of a truck by means of the safety arrangement, the method further comprises the step of, upon verification of the control signal, providing an indication of the verification, the indication being at least one of a visual indication and an audible indication.

### BRIEF DESCIPRTION OF THE DRAWINGS

The invention will now be described in more detail and with reference to the appended drawings, in which:
Fig. 1 is a schematic view of a truck comprising an embodiment of a safety arrangement according to an aspect of the present invention;
Fig. 2 is a block diagram of an embodiment of a safety arrangement according to an aspect of the present invention; and
Fig. 3 is a flowchart of an embodiment of a method of operating and securing a tail lift of a truck by means of a safety arrangement according to an aspect of the present invention.

### DESCRIPTION OF EMBODIMENTS

The present invention will now be described more fully hereinafter with reference to the accompanying drawings, in which exemplifying embodiments of the invention are shown. The present invention may, however, be embodied in many different forms and should not be construed as limited to the embodiments set forth herein; rather, these embodiments are provided for thoroughness and completeness, and to fully convey the scope of the invention to the skilled addressee. Like reference characters refer to like elements throughout.

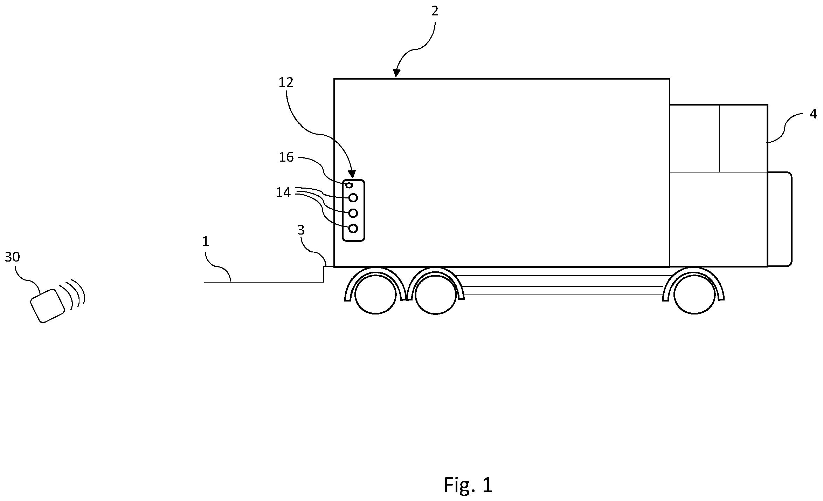

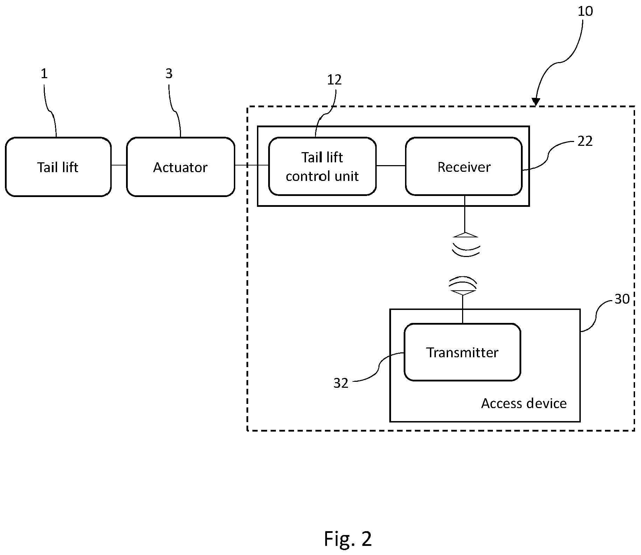

With reference to Figs. 1 and 2, there is provided a safety arrangement 10 for a truck 2 having a tail lift 1. The safety arrangement 10 comprises a tail lift control unit 12 for controlling operation of the tail lift 1, a wireless access device 30 arranged to generate a control signal, and a receiver 22 for receiving the control signal. When the receiver 22 receives a control signal from the access device 30 indicating that the access device 30 is located within a predetermined distance from the tail lift control unit 12, operation of the tail lift 1 by means of the tail lift control unit 12 is allowed. When, on the other hand, the receiver does not receive a control signal indicating that the access device is located within the predetermined distance from the tail lift control unit 12, operation of the tail lift 1 by means of the tail lift control unit 12 is blocked.

In the exemplifying embodiment shown in Fig 1, the tail lift control unit 12 is arranged at the truck body, and more particularly at a wall of the truck 2, near the rear end thereof. This location of the tail lift control unit 12 allows an operator to have control over the surrounding and the tail lift platform during operation of the same, reducing the risk of any accident relating to e.g. load misplacement or approaching persons or vehicles to occur. The tail lift control unit 12 may, however, be arranged at any other location suitable for the purpose of controlling the operation of the tail lift 1, such as for example at an inner wall of the truck 2, or other.

The tail lift control unit 12 comprises input buttons 14 and circuitry for controlling operation of the tail lift 1. Generally, the tail lift control unit 12 is coupled via an actuator interface to an actuator 3, which activates the tail lift 1 based on input from the tail lift control unit 12. The tail lift 1 and actuator 3 can be of types generally known in the art. For example, the actuator 3 can be an electric or hydraulic pump which actuates the tail lift 1 based on control signals from the actuator interface. The actuator interface receives lift control logic signals from the tail lift control unit 12 and based on these, provides suitable signals to the actuator 3 for actuating the tail lift. The input buttons 14 of the tail lift control unit 12 each actuates the tail lift 1 in a specific manner when pressed by sending a corresponding lift control logic signal to the actuator interface, such to lower, raise, or tilt the tail lift 1. The tail lift control unit 12 is in an embodiment powered by an electrical power source on the truck 2.

When the tail lift control unit 12 is disconnected from the electrical power source of the truck 2, no input signal from the tail lift control unit 12 is transferred to the actuators 3 of the tail lift 1. Thereby, the tail lift control unit 12 is not operable for controlling operation of the tail lift 1. In this state, the tail lift control unit 12 is thus blocked from controlling operation of the tail lift 1. This state may be referred to as a blocked or a deactivated state of the tail lift control unit 12. In another embodiment, the tail lift system 20 can be powered by its own power source, such as a battery. The tail lift control unit 12 can, according to another embodiment, be configured to enter the blocked or deactivated state without being disconnected from the electrical power source. For example, the tail lift control unit 12 can be configured to send lift control logic signals to the actuator interface only provided that an external signal is inputted to the circuitry of the tail lift control unit 12.

One or more additional control units can, in an alternative embodiment, be arranged at different locations of the truck 2. Each of the additional control units are configured to send an input signal generated by pressing input buttons arranged thereon to the tail lift control unit 12 to control the operation of the tail lift 1. The input signals sent to the tail lift control unit 12 can then be transmitted from the tail lift control unit 12 to the actuator interface for actuating the tail lift 1. The transfer of input signals from the additional control units to the tail lift control unit 12 can be either wireless or by wiring. If the tail lift control unit 12 enters the blocked or deactivated state, however, no input signals from the additional control units are transmitted to the actuator interface. Thereby, the additional control units are also blocked from controlling operation of the tail lift 1 when the tail lift control unit 12 is in the blocked state.

Fig. 2 shows a functional system block diagram of an embodiment of the security arrangement 10 in which the tail lift control unit 12 comprises the receiver 22. In an alternative embodiment, the receiver 22 is not comprised in the tail lift control unit 12, but communicates therewith either by wire or wireless. The receiver 22 is configured to receive a valid control signal. Upon receiving a control signal, the receiver 22 is configured to verify validity of the received control signal and, upon verification of a valid control signal, provide an output to the tail lift control unit 12 allowing operation of the tail lift 1 thereby. When no signal is received by the receiver 22, or validity thereof is not confirmed, no output allowing operation of the tail lift 1 is provided to the tail lift control unit 12 from the receiver 22, and operation of the tail lift 1 by means of the tail lift control unit 12 is blocked.

More specifically, according to this exemplifying embodiment of the safety arrangement 10, when the receiver 22 does not receive a valid signal, the receiver 22 generates an output to the tail lift control unit 12 which blocks the transfer of any input signal generated by pressing the buttons 14 of the tail lift control unit 12 to the actuator interface, and thus to the actuator 3 for operating the tail lift 1. Alternatively, when no valid signal is received by the receiver, the tail lift control unit 12 is disconnected from the electrical power source by which it is powered. As a result, input signals to the tail lift control unit 12 generated by pressing the input buttons 14 thereon, are not transmitted to the actuator interface and the actuator 3 for actuating the latter. Thereby, operation of the tail lift 1 is blocked.

Furthermore, the control signal for the receiver 22 to receive is a radio signal, according to the exemplifying embodiment. In this embodiment, the receiver operates on one or more radio frequencies. When a valid radio signal is received and read by the receiver 22, the receiver 22 provides an output to the tail lift control unit 12 for allowing operation of the tail lift 1 thereby. According to an embodiment, the signal is coded. In this embodiment, the receiver 22 is provided with means for decoding the control signal for verifying its validity upon receiving the same. A skilled person understands, in the light of this disclosure, that providing a receiver arranged to receive other types of signals is also conceivable within the concept of the present invention, such as infrared waves.

In the embodiment shown in Fig. 1, the tail lift control unit 12 further comprises an indicator 16 for indicating the state of operability of the tail lift 1 from the tail lift control unit 12. Whenever the receiver 22 receives a valid control signal, the indicator 16 is active, thus indicating that the tail lift control unit 12 is operable for controlling the operation of the tail lift 1. In the exemplifying embodiment of Fig. 1, the indicator 16 is a visual indicator comprising a light source. In a preferred embodiment, the indicator 16 comprises a light emitting diode, LED. The LED is in this embodiment arranged to be illuminated whenever the receiver 22 receives a valid control signal. The color of the light can be changed depending on different factors, described in more detail further on in this disclosure, with reference to the transmitter of such a valid control signal. Any other light source suitable for an indicator 16 is, however, also possible within the concept of the present invention, as are other types of indicators, such as an audible indicator.

Continuing now with Figs. 1 and 2, the wireless access device 30 of the safety arrangement 10 is arranged for generating a control signal to the receiver 22. The access device 30 is of a size allowing it to be carried by an operator, for example in a pocket. The access device 30 can also be provided with a neckband such that an operator can carry the access device 30 around the neck, or with a corresponding wrist band such that it can be worn at a wrist of an operator.

With reference to Fig. 2, the wireless access device 30 comprises a transmitter 32 configured to send a control signal to the receiver 22 of the tail lift control unit 12 which the receiver 22 can validly receive when the access device 20 is located within a predetermined distance from the tail lift control unit 12. The predetermined distance is set such that an operator carrying the access device 20 can stand in the vicinity of the truck 2 without blocking the tail lift control unit 12 from controlling the operation of the tail lift 1. Furthermore, the predetermined distance is set such that the tail lift control unit 12 is blocked from controlling operation of the tail lift 1 when, for example, the operator reaches the door of the driver cabin 4 of the truck 2 and when the operator is not in the vicinity of the truck 2. Generally, and as an example only, the predetermined distance is between 1 and 3 meters, preferably around 2 meters.

The control signal generated by the transmitter 32 of the access device 30 is, according to this embodiment, a radio signal which operates on one or more frequencies. The radio signal can for example be at least one of a datagram, a data stream, an address information or a code. The radio signal can be transmitted as a pulsed signal, with a frequency providing a suitable response time for the receiver to validate the signal from the transmitter when the access device 30 approaches the tail lift control unit 12. As an example, the control signal can be transmitted every 3-7 seconds, such as every 5 seconds. Higher frequency pulses are also possible within the concept of the present invention, but might however cause an unnecessarily elevated power consumption of the access device 30. This could result in the access device requiring frequent battery changes. Lower frequency pulses are also possible within the concept of the present invention, but might be less efficient due to long response time which can result in the operator having to wait several seconds for the tail lift control unit 12 to be powered even though the access device 30 is within the predetermined distance from the tail lift control unit 12. The radio signal can, according to an embodiment, be coded, whereby the receiver 22 is provided with means for decoding the control signal for verifying the same. In an embodiment, the radio signal is transmitted as a frequency modulated signal.

In the embodiment shown in Fig. 2, the transmitter 32 is configured to transmit a control signal having a range that corresponds to the predetermined distance. Thereby, when the access device 30 is located at a distance exceeding the predetermined distance from the tail lift control unit 12, the control signal does not reach the receiver 22. As a consequence, the receiver 22 provides no output for allowing operation of the tail lift 1 by means of the tail lift control unit 12. It is also possible, according to an embodiment, to provide a proximity detector which provides an information regarding the distance between the access device 12 and the tail lift control unit 12. The information provided by such a proximity detector can in an embodiment be used by the receiver for providing a corresponding output to the tail lift control unit 12 based on the information. In another embodiment, the information provided by the proximity detector is used by the access device 30 for generating a control signal which is either valid or invalid for the receiver 22 depending on the detected distance. Such a proximity detector can thus be comprised in the safety arrangement 10 and arranged at either one of the receiver 22, the tail lift control unit 12 and the access device 30.

Providing a transmitter of other types of signals, such as infrared waves or other, is also possible within the concept of the present invention.

The access device 30 is further generally powered by a battery. The battery can be an exchangeable battery or a chargeable battery. In order to prevent operation of the tail lift 1 being blocked due to lack of power of the access device 30, in an embodiment of the safety arrangement 10 the indicator 16 of the tail lift control unit 12 is configured to provide an indication when the battery power of the access device 30 is low. As described earlier with respect to the indicator 16, when the access device 30 is within the predetermined distance from the tail lift control unit 12, the verification of the control signal by the receiver 22 generates the activation of an indicator 16, generally a visual indicator such as a light source. The tail lift control unit 12 can further be configured to, upon verification of a valid second control signal which indicates that the battery of the access device 30 is low, generate activation of a second indicator. The second indicator can in an embodiment comprise a light source emitting light of a different color. Thereby, an indication to the operator regarding a recommended battery change is provided. A further indication can be provided by a third indicator when the battery needs to be changed. The third indicator is in this embodiment activated when the receiver 22 receives a valid third control signal indicating that the battery of the access device 30 is very low. Upon reception of a valid third control signal by the receiver 22, operation of the tail lift 1 by means of the tail lift control unit 12 is blocked.

When the access device 30 is located at a distance from the tail lift control unit 12 exceeding the predetermined distance, such that the tail lift control unit 12 is in the blocked state and, thus, is blocked from controlling operation of the tail lift 1, the indicator 16 is deactivated.

An operator carrying the access device 30 as herein described can thus block operation of the tail lift 1 by simply moving away from the truck 2 to a distance exceeding the predetermined distance from the tail lift control unit 12. When the operator is located beyond the predetermined distance from the tail lift control unit 12, the receiver 22 will receive a control signal from the transmitter 32 of the access device 30 indicating that the access device 30 is located at a distance exceeding the predetermined distance from the tail lift control unit 12, or no signal at all. Consequently, the receiver 22 provides no output to the tail lift control unit 12 for allowing operation of the tail lift 1, and the tail lift control unit 12 is thereby blocked from controlling operation of the tail lift 1. By this means, there is no risk for any unauthorized operation of the tail lift 1 being carried out while the operator is beyond the predetermined distance from the tail lift control unit 12 of the truck 2.

When the operator returns and is within the predetermined distance from the tail lift control unit 12, the control signal from the transmitter 32 of the access device 30 indicating that the access device is within the predetermined distance from the tail lift control unit 12 is received by the receiver 22. As a consequence, the receiver 22 provides an output to the tail lift control unit 12 allowing operation of the tail lift 1 by means of the tail lift control unit 12. Thus, no special action from the operator is required for blocking or unblocking operation of the tail lift 1.

In an embodiment, the safety arrangement further comprises a main access control switch arrangeable in an active state and an inactive state. The main access control switch is preferably arranged in the driver cabin 4 and configured such that, when in the active state, allow operation of the tail lift 1 by means of the tail lift control unit 12 irrespective of the location of the access device 30. The main access control switch is configurable to communicate with the tail lift control unit 12 in a wired or a wireless manner.

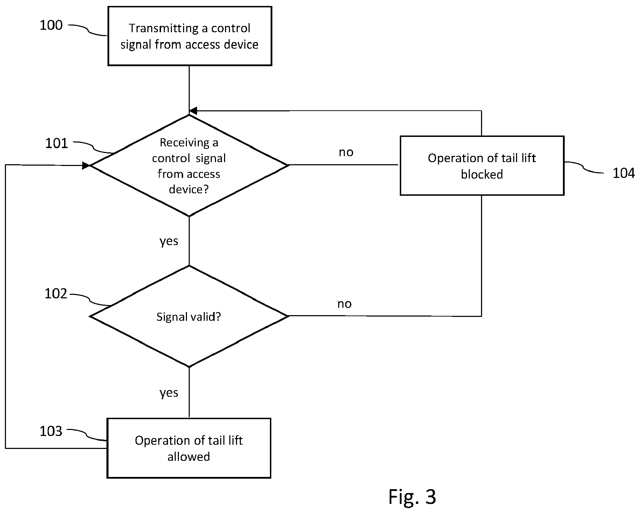

With reference now to Fig. 3, a method of operating and securing a tail lift 1 of a truck 2 by means of the safety arrangement 10 is shown. The method comprises the steps of transmitting 100 the control signal from the access device 30; receiving 101 the control signal from the access device 30; verifying 102 that the control signal is valid for operation of the tail lift 1; upon verification of the control signal, allowing operation 103 of the tail lift 1 by means of the tail lift control unit 12; and, upon reception of an invalid signal, or of no signal, block 104 operation of the tail lift 1 by means of the tail lift control unit 12. The method can, according to an embodiment and under the circumstances leading to step 103, also comprise the step of providing an indication of the verification of the control signal, not shown in the flowchart of Fig. 3. The indication can be provided at the tail lift control unit 12. The indication can further be at least one of a visual indication, such as a light, or an audible indication.

The skilled person realizes that a number of modifications of the embodiments described herein are possible without departing from the scope of the invention, which is defined in the appended claims. For example, the receiver can, in an embodiment, be replaced by a transceiver for communicating with the access device and the circuitry of the tail lift control unit. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. Any reference signs in the claims should not be construed as limiting the scope.

## Claims

1. A safety arrangement (10) for a tail lift (1) of a truck (2), comprising
a tail lift control unit (12) for controlling operation of said tail lift,
a wireless access device (30) for generating a control signal, and
a receiver (22) for receiving said control signal;
wherein said tail lift control unit is configured to allow operation of said tail lift by means said tail lift control unit in response to said receiver receiving a control signal indicating that the access device is located within a predetermined distance from said tail lift control unit, and to block operation of said tail lift by means of said tail lift control unit when said control signal indicates that the access device is located at a distance exceeding said predetermined distance or when not receiving a signal from the access device.

2. The safety arrangement (10) according to claim 1, wherein said tail lift control unit (12) comprises said receiver (22).

3. The safety arrangement (10) according to claim 1 or 2, wherein said tail lift control unit (12) is arranged at a truck body.

4. The safety arrangement (10) according to any one of the preceding claims, wherein said access device (30) comprises a transmitter (32) arranged to transmit said control signal.

5. The safety arrangement (10) according to any one of the preceding claims, wherein said control signal is configured to have a range corresponding to said predetermined distance.

6. The safety arrangement (10) according to any one of the preceding claims, wherein said control signal is a radio signal.

7. The safety arrangement (10) according to any one of the preceding claims, wherein said access device (30) is powered by a battery.

8. The safety arrangement (10) according to any one of the preceding claims, wherein said access device (30) is wearable at least at one of a wrist and a neck, or in a pocket of an operator.

9. The safety arrangement (10) according to any one of the preceding claims, wherein said tail lift control unit (12) further comprises an indicator (16) which is active when said receiver (22) receives said control signal from said access device (30).

10. The safety arrangement (10) according to claim 9, wherein said indicator (16) is at least one of a visual indicator and an audible indicator.

11. The safety arrangement (10) according to claim 7 and 9 or 10, wherein said indicator (16) is configured to provide an indication when the battery power of said access device (30) is low.

12. The safety arrangement (10) according to any one of the preceding claims, wherein said safety arrangement further comprises a main access control switch arrangeable in an active state and an inactive state, and wherein when said main access control switch is in said active state, operation of said tail lift (1) is allowed irrespective of the location of said access device (30).

13. A method of operating and securing a tail lift (1) of a truck (2) by means of a safety arrangement (10), said safety arrangement comprising a tail lift control unit (12) for controlling the operation of said tail lift, a wireless access device (30) for generating a control signal, and a receiver (22) for receiving said control signal, said method comprising the steps of:
transmitting (100) said control signal from said access device;
receiving (101) said control signal from said access device;
verifying (102) that said control signal is valid for operation of said tail lift;
upon verification of said control signal, allowing (103) operation of said tail lift by means of said tail lift control unit; and
upon reception of an invalid signal, or of no signal, blocking (104) operation of said tail lift by means of said tail lift control unit.

14. The method according to claim 13, further comprising the step of, upon verification of said signal, providing an indication of the verification, said indication being at least one of a visual indication, such as a light, and an audible indication.
